# EUROPEAN PATENT SPECIFICATION

(11) **EP 2 024 165 B1**
(45) Date of publication and mention of the grant of the patent: **21.04.2010**
(21) Application number: 07725024.9
(22) Date of filing: 09.05.2007
(51) Int. Cl.: B29C 55/06, D01D 5/42

(54) **METHOD FOR PRODUCING PLASTIC FILM**
VERFAHREN ZUR HERSTELLUNG EINER KUNSTSTOFFFOLIE
PROCÉDÉ DE PRODUCTION DE FILM DE PLASTIQUE

(30) Priority: 11.05.2006 SE 0601047
(43) Date of publication of application: 18.02.2009
(73) Proprietor: Trioplast AB, 333 00 Smålandsstenar (SE)
(72) Inventor: KARLSSON, Hans, S-302 50 Halmstad (SE)
(74) Representative: Andersson, Inga-Lill
(86) International application number: PCT/EP2007/004101
(87) International publication number: WO 2007/131684

(56) References cited:
- EP-A- 0 241 643
- GB-A- 1 172 038
- GB-A- 1 303 151
- US-A- 4 017 251
- US-A1- 2003 183 975

## Description

### Field of the invention

The present invention relates to a process for producing a plastic film having reinforced edges.

### Background of the invention

Plastic film is used in many instances today. As an example, plastic stretch film is widely used for wrapping goods, for example for shipping or storing. The plastic wrapping film is quite thin and is thus fragile and prone to tearing of the film, particularly at the edges of said film. If the edges of the films are reinforced, the plastic film will become more durable.

Methods for producing plastic film having reinforced edges are known in the art. US 5,565,222 describes a cold method for producing a stretch film having flat, double thickness hems on opposite margins of the film. One disadvantage with such cold method for producing reinforced edges is that the edges are easily separable during application and/or use.

US 6,592,699 describes a stretch film having permanently heat-sealed edges. The edges are formed by folding the edge portions of the film into a double layer.

A common disadvantage with the above prior art techniques is that the thickness of the edge portions is about double the size of the centre portion of the film. As a result, the film having such reinforced edges are difficult to wind onto a core for storage. These methods are also laborious and time consuming, as only one reel can have reinforced edges at a time. Furthermore, less film can be wound onto a reel without affecting the reel quality.

### Summary of the invention

One object of the present invention is to overcome at least one of the above mentioned problems, and to provide a method and an apparatus for providing a plastic film having reinforced edges that is easy to wind onto a core for storage.

These and other objects are at least partly met by the invention as described in the enclosed claims.

Hence, in a first aspect the present invention provides a method for producing plastic film comprising the steps of;
- advancing a plastic film from film providing means to film collecting means along a transfer path;
- dividing the plastic film by dividing means in the direction of transfer into at least two essentially parallel film sections; and
- stretching said film sections by a stretch unit in the direction of transfer beyond the yield point such that reinforcement of each one of the edge portions of said film sections are provided due to material shrinkage of the edge portions in the direction lateral to the direction of transfer, wherein the stretch level of the film is from 50 to 250%.

The invention is based on the finding that when the film is separated into parallel film sections before the film is stretched, neck-in will occur of all the edge portions of the film sections. A "neck-in" is a reduction in the film width as the film is being stretched. Stretching of the film beyond its yield point, which implies plastic deformation of the film, has been found to create a non-uniform thickness across the width of the film section. Hence, permanently reinforced edges are obtained of all the edge portions of film sections in an in-line method for producing stretch film.

In-line production of plastic film implies that the film is divided and stretched in the same process as the film is produced. Normally, many rolls are produced at the same time. In-line production is thus much more efficient and cost effective than off-line production of plastic films. As reinforcement of the edge portions of the film may be performed in the in-line method for producing plastic stretch film according to the present invention, this method is thus even more efficient and cost effective as compared to off-line production.

In the method according to the present invention, no further edge trimming is needed before winding. This method thus gives a film having reinforced edges that can be wound to large diameters without affecting reel quality. A bad reel quality, due to the thicker edges, gives a typical concave shape of the reel. Thus, less film can be wound on such a reel. Furthermore, difficulties may arise when the film is unwound from the reel.

Furthermore, an apparatus for producing plastic stretch film is provided. The apparatus has film providing means, film dividing means, a film stretch unit and film collecting means, and the apparatus is adapted to advance a film in a direction from the film providing means to the film collecting means. The film dividing means divides the film in the direction of transfer, and is positioned before the film stretch unit in the direction of transfer such that the edge portions of the plastic film produced by the apparatus are reinforced due to material shrinkage of the edge portions in the direction lateral to the direction of transfer.

The invention will now be further described in the sections below.

### Brief description of the drawings

Fig. 1 shows a method for producing stretched plastic film having reinforced edges by using a blown film process.
Fig. 2 shows a method for producing stretched plastic film having reinforced edges by using a cast film process.

### Detailed description

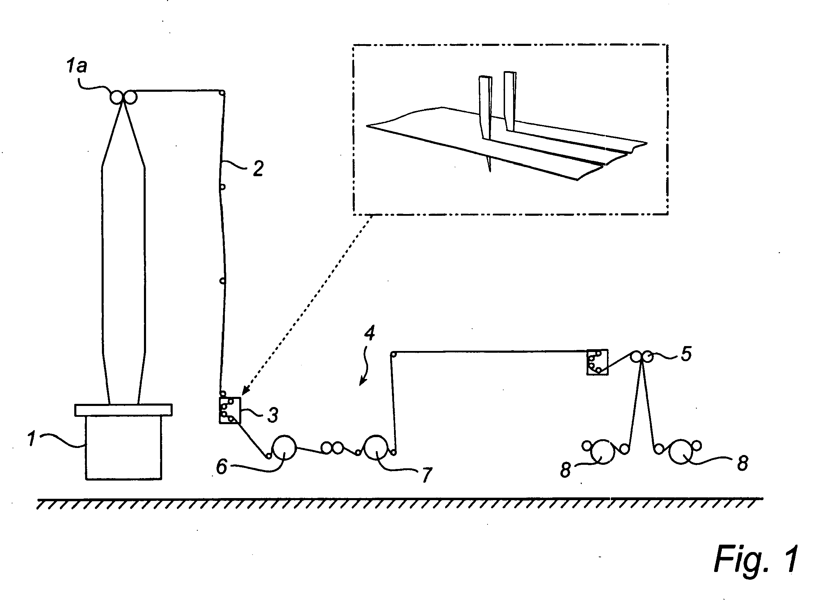

Figure 1 shows a method for producing stretched plastic film having reinforced edges. A mono- or co-extruded blown film is produced that is advanced through primary nip rollers 1 a. The nip roller nips together the blown film. From the primary nip rollers the plastic film 2 is passed via guide rollers to the dividing station 3 where the film is divided into two or several parallel sections. The film is then passed through the stretch unit 4, where stretching is performed between two rollers, draw roller one 6 and draw roller two 7, having different speeds. When the material undergoes stretching, a neck-in occurs. Neck-in is a reduction in the film width as the film is being stretched.

The yield point (also known as yield strength) of a material is defined as the stress at which the material begins to plastically deform. In contrast to elastic deformation, which is reversible and which only exists below the yield point, plastic deformation is an irreversible event. Consequently, a material which is exposed to stress, such as stretching, beyond its yield point does not return to its original shape when the stress is removed. By stretching the plastic film according to the invention, a permanent neck-in is created by the plastic deformation of the material. In the case of a polyethylene film, stretching beyond the yield point typically corresponds to stretching the film 50-70 % of its original length.

Stretching of the film beyond its yield point has been found to create a non-uniform thickness across the width of the film section. More particularly permanently thickened edge portions are created with a wide central zone of substantially uniform thickness reduced from the thickness of the film before stretching. Since dividing of the full width film into parallel film sections is performed before stretching, this phenomenon occurs at the edge portions of all film sections. The stretched film sections with reinforced edge portions are passed to the secondary nip rollers 5 where the film sections may be separated before winding to the winder 8.

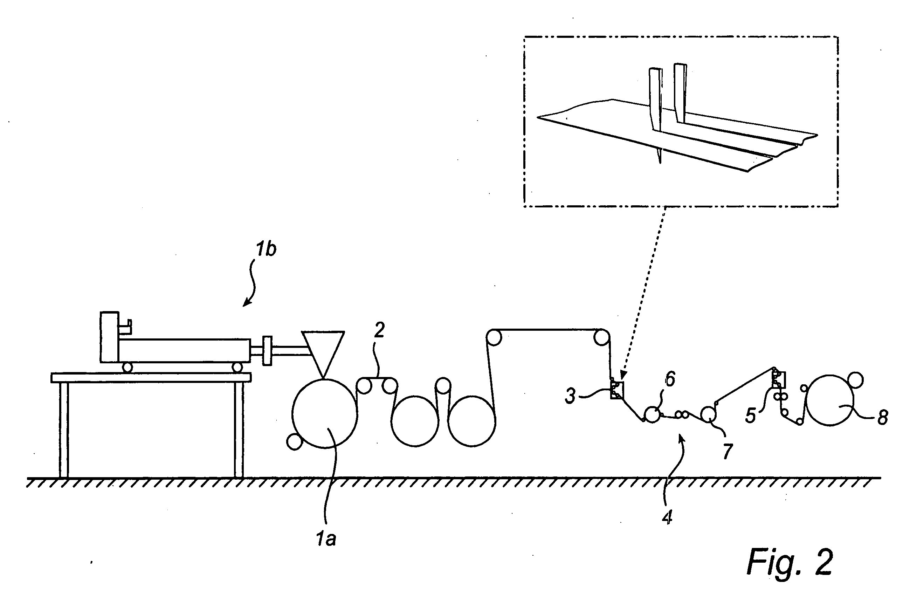

Figure 2 shows another method for producing stretched plastic film having reinforced edges. A mono- or co-extruded cast film is produced. From the cast unit 1 b the plastic film 2 is advanced through one or several guide rollers to the dividing station 3 where the film is divided into two or several parallel film sections. The cast unit is a unit where the film is cast. The film sections are passed through the stretch unit 4, where stretching is performed between two rollers having different speeds. When the material undergoes stretching, a neck-in occurs. Neck-in is a reduction in the film width as the film is being stretched.

Stretching of the film beyond its yield point has been found to create a non-uniform thickness across the width of the film section. More particularly permanently thickened edge portions are created with a wide central zone of substantially uniform thickness reduced from the thickness of the film before stretching. Since dividing of the full width film into parallel sections is performed before stretching, this phenomenon occurs at the edge portions of all film sections. The stretched film sections having reinforced edges are passed through the secondary nip rollers 5 before winding to the winder 8.

The plastic film used may be a cast film or a blown film. The plastic film is typically a polyolefin film, such as but not limited to a polyethylene or comprising co-polymers of ethylene. It may also be ethylene vinyl acetate, EVA.

The film may be a mono layer film, or a multi layer film. For example, it may be a multi layer film having 2-6 layers. The different layers in the multi layer film may have different properties, such as adhesive properties, and different strength properties. These properties may be chosen according to the customer's needs.

Film providing means may be a cast unit, or an extruder for blown film. It may also be any other type of means for producing film.

Film dividing means may be a knife, such as a razor blade.

A stretch unit may be means for stretching the plastic film. This is usually performed by two rollers, which are wound at different speeds as compared to each other. The first draw roller in the direction of transfer is wound at a lower speed as compared with the second draw roller. By adjusting the speed of the rollers, different stretch levels are achieved.

Film collecting means may be winders, or reels, on to which the film is wound. It may also be collected in any other way, for example film produced directly into a box, or a tray or a pallet.

In the present invention, during in-line production of plastic film, the dividing of the plastic film into film sections is performed before stretching of the film. The dividing of the film may be performed by cutting. Cutting may be performed by any kind of knife, such as razor blades. It may also be performed by laser, compressed air or fluid. The knife may be pre-heated before treatment to a temperature of approximately 30-90°C.

After the film has been divided into film sections, a neck-in occurs, which reinforces each one of the edge portions of the film. The film may be divided into for example 1-12 essentially parallel film sections, or 1-6 film sections. The width of the film section may be chosen entirely according to the customer's needs.

The reinforced edge portions may be 10-80% thicker than the center portion of the film. Preferably it may be 20-50% thicker than the center portion of the film. Such thickness of the edge portions reinforces the film without affecting the winding quality of the film.

For example, the thickness of the reinforced edge portions may be, but not limited to, 5-18 micrometer, as compared to the thickness of the center portion of the film, which may be 4-13 micrometer.

"Stretch level" according to the present invention is defined as the ratio of the film length after stretching to the initial unstretched length. Thus, a stretch level of 100% means that a film increases 100% in length due to stretching. The stretch level of the film according to the present invention may be from 50-250%.

After the film sections have been stretched, they are wound on a winder, such as reels or cores.

The apparatus for producing a plastic film having reinforced edges may have a knife or a razor blade as dividing means. It may also be a laser beam or compressed air or fluid.

According to one embodiment, the apparatus has providing means for providing a blown film, and the apparatus further comprises a nip for nipping the blown film after it has been produced. The dividing means is positioned after the nip and before the stretch unit, i.e. between the nip and the stretch unit, counted in the direction of transfer.

According to another embodiment, the apparatus has as providing means a cast unit for providing a cast film. The dividing means is then positioned after the cast unit and before the stretch unit, i.e. between the cast unit and the stretch unit, counted in the direction of transfer.

Further, the apparatus may comprise a winder for winding the stretched film.

The film may be used as machine stretch film, or as manual stretch film. It may also be used as balewrap, such as to wrap grass or hay.

### Example

A blown film with thickness 20 micrometers with a lay flat tube width of 2000 mm is produced. The plastic film can consist of one or several layers. The primary nip rollers 1 and the first draw roller 6 are running approximately at the same speed. The speed depends on the thickness of the film, and may be determined by a person skilled in the art. The film is advanced to the dividing station 3, where the film is divided by a knife into three separate film sections and trim sections, according to desire.

After the dividing station, the film is advanced to the stretch unit, from the first to the second draw roller. The second draw roller 7 is running at a considerably higher speed than the first draw roller in order to obtain the desirable thickness of 10 micrometers. The speed depends on thickness and stretch level. The film is then advanced to the secondary nip 5 for separation before winding to the winder 8 as six individual film sections (as the three separate film sections are folded double due to production by the blow extruding method).

The total neck-in of the film sections is approximately 12 percent. The edge portions are about 30 percent thicker than the centers of the separate film sections.

## Claims

1. A method for producing plastic film, comprising the steps of;
- advancing a plastic film (2) from film providing means (1) to film collecting means (8) along a transfer path;
***characterized by***
- dividing said film by dividing means (3) in the direction of transfer into at least two essentially parallel film sections;
- stretching said film sections by a stretch unit (4) in the direction of transfer beyond the yield point such that reinforcement of each one of the edge portions of said film sections is provided due to material shrinkage of the edge portions in the direction lateral to the direction of transfer, wherein the stretch level of the film is from 50 to 250%; and
- collecting said film by said film collecting means (8) after said stretching.

2. A method according to claim 1, further comprising the step of winding said film onto a winder (8) after said stretching.

3. A method according to claim 1 or claim 2, wherein said plastic film is a blown film.

4. A method according to claim 1 or claim 2, wherein said plastic film is a cast film.

5. A method according to claim 3, further comprising the step of nipping said blown film; wherein said dividing is performed after said step of nipping the film and before said step of stretching the film, counted in the direction of transfer.

6. A method according to claim 4, wherein said film providing means is a cast unit (1 b); **characterized in that** the dividing is performed after said cast unit (1b) and before said stretch unit (4).

7. A method according to any of the preceding claims, wherein said reinforced edge portions are between 10-80% thicker than the center portion of the film.

8. A method according to claim 7, wherein said reinforced edge portions are between 20-50% thicker than the center portion of the film.

9. A method according to any of the preceding claims, wherein said reinforced edge portions are between 5-18 micrometers, and the thickness of the center portion of the film is between 4-13 micrometers.

10. A method according to any of the preceding claims, wherein said film is a film of polyethylenes or co-polymers comprising ethylene.

## Patentansprüche

1. Verfahren zur Herstellung von Kunststofffolie, folgende Schritte umfassend:
- Transportieren einer Kunststofffolie (2) von Folienbereitstellungsmitteln (1) zu Folienaufnahmemitteln (8) entlang eines Transportweges,
**gekennzeichnet durch**
- Teilen der Folie mit Teilungsmitteln (3) in Transportrichtung in mindestens zwei im Wesentlichen parallele Folienabschnitte,
- Dehnen der Folie in Transportrichtung über die Dehngrenze hinaus mit einer Dehnungseinheit (4), so dass in Folge der Materialschrumpfung der Randabschnitte quer zur Transportrichtung eine Verstärkung jedes der Randabschnitte bereitgestellt wird, wobei der Dehnungsrad der Folie zwischen 50 und 250 % liegt, und
- Aufnehmen der Folie **durch** die Folienaufnahmemittel (8) nach dem Dehnen.

2. Verfahren nach Anspruch 1, ferner nach dem Dehnen den Schritt des Aufwickelns der Folie auf einen Wickler (8) umfassend.

3. Verfahren nach Anspruch 1 oder 2, wobei die Kunststofffolie eine Blasfolie ist.

4. Verfahren nach Anspruch 1 oder 2, wobei die Kunststofffolie eine Gießfolie ist.

5. Verfahren nach Anspruch 3, ferner den Schritt des Festklemmens der Blasfolie umfassend, wobei das Teilen, in Transportrichtung gesehen, nach dem Schritt des Festklemmens und vor dem Schritt des Dehnens der Folie ausgeführt wird.

6. Verfahren nach Anspruch 4, wobei das Folienbereitstellungsmittel eine Gießeinheit (1 b) ist, **dadurch gekennzeichnet, dass** das Teilen hinter der Gießeinheit (1 b) und vor der Dehnungseinheit (4) ausgeführt wird.

7. Verfahren nach einem der vorhergehenden Ansprüche, wobei die verstärkten Randabschnitte zwischen 10 und 80 % dicker als der Mittelabschnitt der Folie sind.

8. Verfahren nach Anspruch 7, wobei die verstärkten Randabschnitte zwischen 20 und 50 % dicker als der Mittelabschnitt der Folie sind.

9. Verfahren nach einem der vorhergehenden Ansprüche, wobei die verstärkten Randabschnitte zwischen 5 und 18 Mikrometer dick sind und die Dicke des Mittelabschnitts der Folie zwischen 4 und 13 Mikrometer beträgt.

10. Verfahren nach einem der vorhergehenden Ansprüche, wobei die Folie aus Polyethylen oder Copolymeren, die Ethylen umfassen, besteht.

## Revendications

1. Procédé de production de film plastique, comprenant les étapes suivantes :
- avancement d'un fil plastique (2) depuis un moyen de fourniture de film (1) vers un moyen collecteur de film (8) le long d'un passage de transfert ;
**caractérisé par**
- la division dudit film par un moyen diviseur (3) dans le sens de transfert en au moins deux sections de film sensiblement parallèles ,
- l'étirement desdites sections de film par une unité d'étirement (4) dans le sens de transfert au delà du point de limite élastique de manière à ce que le renforcement de chacune des parties périphériques desdites sections de film soit assuré en raison de la rétraction du matériau des parties périphériques dans le sens latéral vers le sens de transfert, le niveau d'étirement du film allant de 50 à 250 % ; et
- la collecte dudit film par ledit moyen collecteur de film (8) après ledit étirement.

2. Procédé selon la revendication 1, comprenant en outre l'étape d'enroulement dudit film sur un enrouleur (8) après ledit étirement.

3. Procédé selon la revendication 1 ou 2, ledit film plastique étant un film soufflé.

4. Procédé selon la revendication 1 ou 2, ledit film plastique étant un film coulé.

5. Procédé selon la revendication 3, comprenant en outre l'étape de compression dudit film soufflé ; ladite division étant réalisée après ladite étape de compression du film et avant ladite étape d'étirement du film prise en compte dans le sens de transfert.

6. Procédé selon la revendication 4, ledit moyen de fourniture de film étant une unité de coulage (1b) ; **caractérisé en ce que** la division est réalisée après ladite unité de coulage (1) et avant ladite unité d'étirement (4).

7. Procédé selon l'une quelconque des revendications précédentes, lesdites parties périphériques renforcées étant 10 à 80 % plus épaisses que la partie centrale du film.

8. Procédé selon la revendication 7, lesdites parties périphériques renforcées étant 20 à 50 % plus épaisses que la partie centrale du film.

9. Procédé selon l'une quelconque des revendications précédentes, lesdites parties périphériques renforcées mesurant de 5 à 18 micromètres et l'épaisseur de la partie centrale du film étant comprise entre 4 et 13 micromètres.

10. Procédé selon l'une quelconque des revendications précédentes, ledit film étant un fim de polyéthylènes ou de copolymères contenant de l'éthylène.
